# EUROPEAN PATENT APPLICATION

(11) **EP 4 653 930 A1**
(43) Date of publication of application: **26.11.2025**
(21) Application number: 23916762.0
(22) Date of filing: 19.01.2023
(51) Int. Cl.: G02B 7/04

(54) **FOCUSING MECHANISM AND APPARATUS OF TELESCOPE**

(71) Applicant: Nantong Schmidt Opto-Electrical Technology Co., Ltd, Nantong, Jiangsu 226503 (CN)
(72) Inventor: SUN, Yufeng, Nantong, Jiangsu 226500 (CN); ZHOU, Jirong, Nantong, Jiangsu 226301 (CN)
(74) Representative: Piotrowicz, Pawel Jan Andrzej
(86) International application number: PCT/CN2023/073045
(87) International publication number: WO 2024/152279

(57) **Abstract**

A focusing system for an optical instrument such as a telescope comprises first and second tubes that extend in a longitudinal direction, the second tube shaped to define a bore such that the first tube extends into the bore; an optical element coupled to one of the first and second tubes for movement therewith; an elastically deformable element between the first tube and the bore defined by the second tube; and first and second rolling bearings supported at first and second longitudinally spaced apart sections of the elastically deformable element for rolling movement while supported at the first and second sections, the first and second rolling bearings in contact with the outer surface of the first tube, wherein relative movement between the first and second tubes in the longitudinal direction is facilitated by rolling movement of the rolling bearings along the outer surface of the first tube.

## Description

### TECHNICAL FIELD

The present invention relates to the field of optical instruments, such as telescopes and/or the like. Some aspects of the invention provide a focusing system for an optical instrument, such as a telescope and/or the like.

### BACKGROUND

The focusing system of a telescope usually includes two tubular parts of different diameters set together (typically substantially coaxially) in which light passes through the inner tube with a smaller diameter. One of the tubular parts, typically fixed to the main structure (base) of the telescope, is commonly referred to as a fixed tube; the other tubular part, which can move along the common axial direction of the two tubular parts, is commonly referred to as a moving tube.

The moving tube may comprise, support and/or house a number of optical components, such as, by way of non-limiting example, one or more lenses, one or more mirrors, etc. The moving tube may also comprise, support and/or house optical equipment, such as, by way of non-limiting example, image-capture devices and/or the like. With the movement of the moving tube, the position of the optical element and/or optical equipment in the optical path changes accordingly, thus achieving focus adjustment.

In some focusing systems, the fixed tube may have a diameter smaller than that of the moving tube, in which case the fixed tube may be referred to as the inner tube and the moving tube may be referred to as the outer tube. In some other focusing systems, the fixed tube may have a diameter larger than that of the moving tube, in which case the fixed tube may be referred to as the outer tube and the moving tube may be referred to as the inner tube. In either case, there is typically a clearance gap between the fixed tube and the moving tube (e.g. a circumferential or annularly cross-sectional shaped gap between an outer surface of the inner tube and the inner surface of the outer tube) to allow for relative axial movement between the moving tube and the fixed tube.

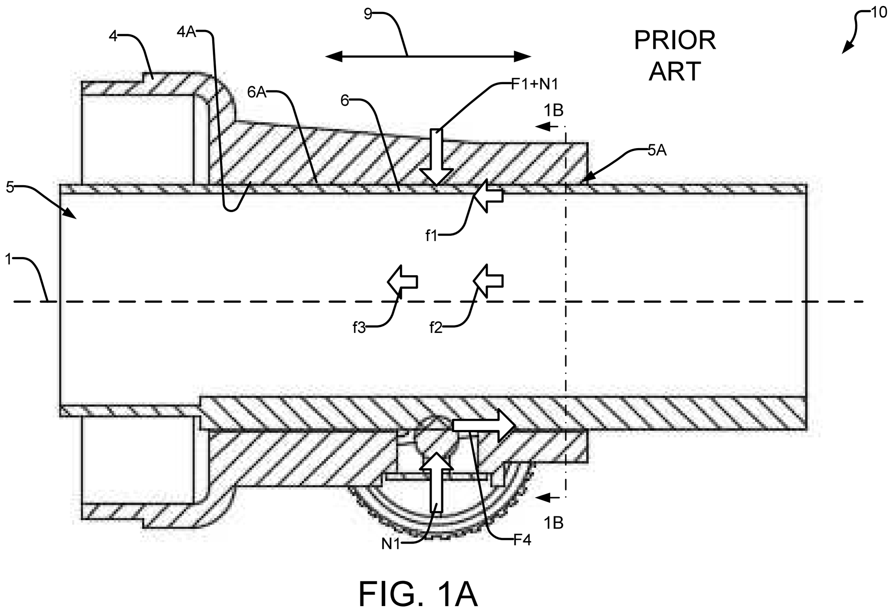

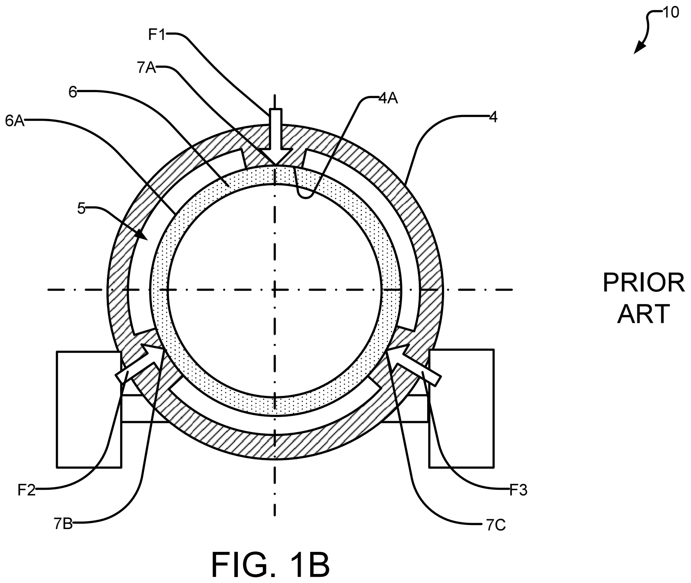

FIG. 1A schematically illustrates a conventional prior art focusing system 10. FIG. 1B is a cross sectional view of focusing system 10 of FIG. 1A along line 1B-1B. Prior art focusing system 10 comprises a moving tube 6 and a fixed tube 4. Optical elements (not shown) may be coupled to moving tube 6. Both moving tube 6 and fixed tube 4 are tubular and extend in a longitudinal directions 9.

Moving tube 6 has a diameter smaller than that of fixed tube 4. Fixed tube 4 comprises a bore-defining surface 4A defining a bore 5 such that moving tube 6 extends into and through bore 5 of fixed tube 4. In focusing system 10, a clearance gap 5A may be formed between outer surface 6A of moving tube 6 and bore-defining surface 4A of fixed tube 4. Clearance gap allows 5A allows relative axial movement between moving tube 6 and fixed tube 4.

In some focusing systems, there may be surface contact between the fixed tube and the moving tube. Such surface contact may permit the fixed tube to provide support to the moving tube. As illustrated in FIG. 1B, when moving tube 6 extends into bore 5 of fixe tube 4, portions of an outer surface 6A of moving tube 6 make contact with inner surface 4A of fixed tube 4 at positions of contact 7A, 7B and 7C respectively with normal forces F1, F2 and F3 (shown as solid arrows). Contact between surface 4A of fixed tube 4 and outer surface 6A of moving tube at positions 7A-C keeps the movement between fixed tube 4 and moving tube 6 relatively close to longitudinal directions 9 but creates friction between moving tube 6 and fixed tube 4 when tubes 4, 6 move relative to one another along longitudinal directions 9 (longitudinal directions 9 extend in and out of the page in FIG. 1B).

Returning to FIG. 1A, in operation, light rays enter the focusing system 10 along an optical axis 1. It is desirable that optical axis 1 is substantially co-axial with longitudinal directions 9. Moving tube 6 may move in longitudinal direction 9 relative to fixed tube 4. Optical elements which are coupled to moving tube 6 can be made to move in longitudinal directions 9 as moving tube 6 moves. The movement of optical elements along longitudinal directions 9 causes optical elements to move to different longitudinal positions on optical axis 1. Consequently, the focal point of optical elements can move on optical axis 1, thus allowing focus control.

A variety of mechanisms for facilitating the movement of moving tube 6 relative to fixed tube 4 in longitudinal directions 9 are known in the art. The characteristics (e.g. size, shape and/or the like) of the clearance gap 5A between fixed tube 4 and moving tube 6 (and any changes in such characteristics) may have significant impact on the operation of a focusing system.

Large clearance is typically conducive to smooth axial movement of the moving tube relative to the fixed tube, but may permit the moving tube and any optical components and/or equipment to move in transverse directions orthogonal to longitudinal direction 9 (e.g. radially) relative to the fixed tube. Relative transverse movements between the moving tube and the fixed tube (in directions orthogonal to longitudinal direction 9) can cause a deleterious effect known as image drift.

Small clearance is conducive to reducing imaging drift of the focusing system, but typically requires a relatively high degree of machining accuracy of the contact surfaces of the moving tube and the fixed tube as well as a relatively high degree of assembly accuracy and correspondingly increases the cost of manufacturing.

Having a small clearance between the moving tube and the fixed tube also makes the focusing system more prone to mechanical failures, which may impede the smooth movement of the moving tube relative to the fixed tube. By way of non-limiting example, such mechanical failures, may be caused by scratches on the contact surface, dust intrusion, a sharp increase in viscous damping of lubricant at low temperatures, etc. In some cases, the moving tube may be jammed due to such mechanical failures.

Focusing system 10 is a system with small clearance gap. As illustrated in FIG. 1B, fixed tube 4 supports and makes rigid contact with moving tube 6 at positions of contact 7A, 7B and 7C. Lubricants may be applied to the surfaces of contact at positions 7A, 7B and 7C to minimize friction associated with surface contact between the two tubes. However, precise fabrication and assembly of the components are still required for proper operation of focusing system 10. Any small imprecision in the components or in the assembly would create undesired gaps or excessive friction at the surfaces of contact, which may create undesired relative radial movements between the two tubes, causing image drift.

One conventional solution to the above problems is to make use of rollers to achieve small amount of linear contact between the fixed tube and the moving tube.

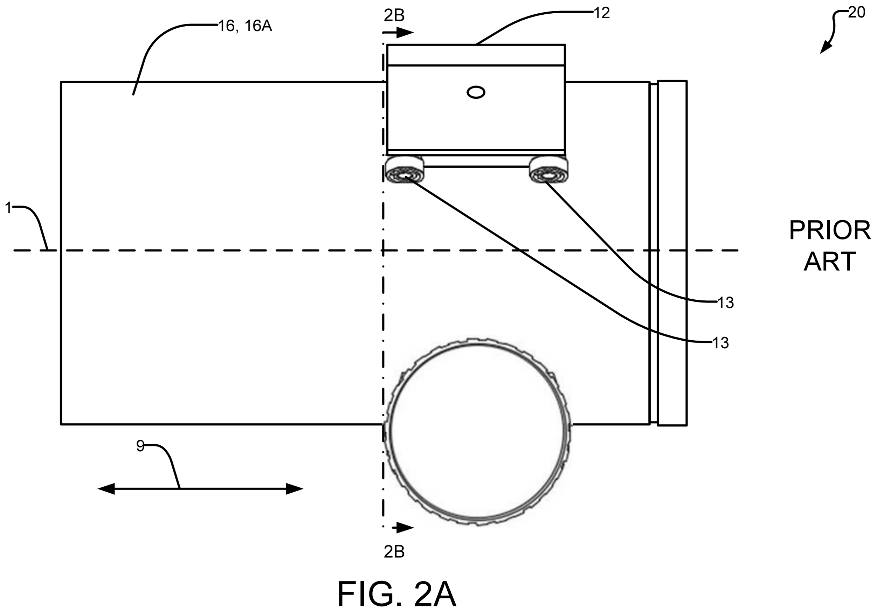

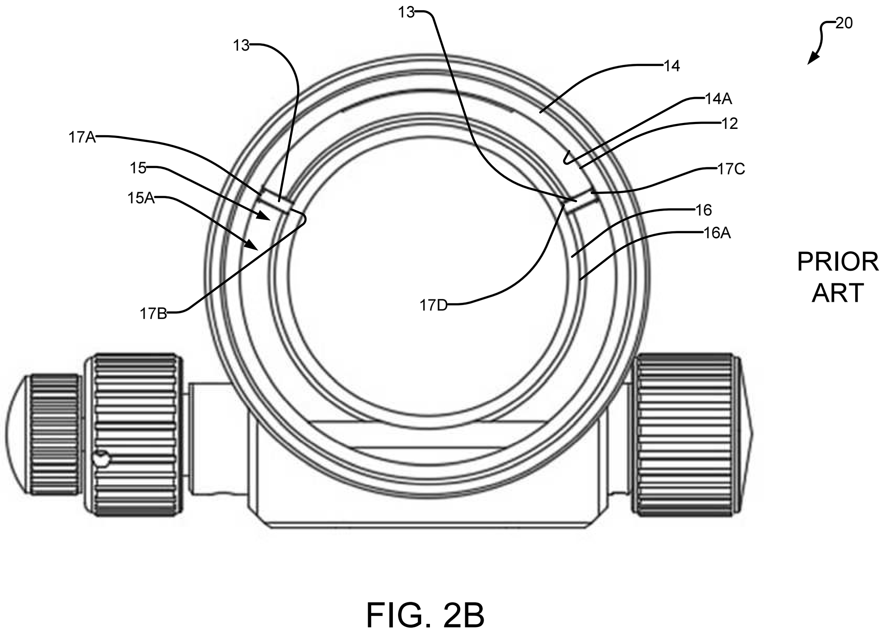

FIG. 2A schematically illustrates a conventional prior art focusing system 20 with rollers. FIG. 2B is a cross sectional view of the focusing system 20 depicted in FIG. 2A along line 2B-2B.

Referring to FIGs. 2A and 2B, focusing system 20 comprises a fixed tube 14 (shown in FIG. 2B), a moving tube 16 and a roller support 12 placed between fixed tube 14 and moving tube 16. Moving tube 16 has a diameter smaller than that of moving tube 14. Fixed tube 14 comprises a bore-defining surface 14A shaped to define a bore 15. Moving tube 16 may extend into and through bore 15. Roller support 12 comprises multiple rollers 13. Rollers 13 bear against an outer surface 16A of moving tube 16 and against a bore-defining surface 14A of fixed tube 14 and are configured to roll in longitudinal directions 9. Moving tube 16 may be coupled to optical elements (not shown).

Referring to FIG. 2B, when moving tube 16 extends into bore 15 of fixed tube 14, a clearance gap 15A exists between outer surface 16A of moving tube 16 and bore-defining surface 14A of fixed tube 14. Rollers 13 are placed in clearance gap 15A, such that rollers 13 are in contact with outer surface 16A of moving tube 16 and bore-defining surface 14A of fixed tube 14 at regions of contact 17A, 17B and 17C, 17D. In operation, relative movement between fixed tube 14 and moving tube 16 along longitudinal directions 9 is facilitated by rollers 13.

Conventional focusing system 20 has the same shortcomings as focusing system 10 in that the rollers 13 make rigid contact with outer surface 16A of inner tube 16 and inner (bore-defining) surface 14A of outer tube 14. Any small imprecision in the components or in the assembly would create undesired gaps or excessive friction at the regions of contact, which may create undesired relative radial movements between the two tubes. Conventional focusing system 20 also comprises a plurality of rollers 13. It may be difficult to ensure optimal contact between rollers 13 and outer surface 16A and/or between rollers 13 and bore-defining surface 14A for all rollers 13. In addition, the cost of making highly precise components is also high.

Accordingly, there remains a desire for a focusing system that is relatively low cost, simple and has no (or at least acceptably low) image drift.

### SUMMARY

One aspect of the invention provides a focusing system for an optical instrument such as a telescope comprising: a first tube that extends in a longitudinal direction; a second tube that extends in the longitudinal direction, the second tube comprising a bore-defining surface shaped to define a bore that extends in the longitudinal direction wherein the first tube extends into the bore; an optical element coupled to one of the first and second tubes for movement therewith; an elastically deformable element located between an outer surface of the first tube and the bore-defining surface of the second tube and extending in the longitudinal direction; and first and second rolling bearings supported at first and second longitudinally spaced apart sections of the elastically deformable element for rolling movement while supported at the first and second sections, the first and second rolling bearings in contact with the outer surface of the first tube, wherein relative movement between the first and second tubes in the longitudinal direction is facilitated by rolling movement of the rolling bearings along the outer surface of the first tube.

The elastically deformable element may be deformed from its non-stressed state such that restorative forces associated with the deformation of the elastically deformable element tend to force the rolling bearings into contact with the outer surface of the first tube.

In some embodiments the elastically deformable element is deformable such that the first and second longitudinally spaced sections of the elastically deformable element are displaceable in directions having directional components orthogonal to the longitudinal direction (e.g. having components in radial directions of the second tube).

In some embodiments the elastically deformable element is deformed such that the first longitudinal section of the elastically deformable element has a first displacement in a first direction having at least a component orthogonal to the longitudinal direction relative to a non-deformed state of the elastically deformable element and the second longitudinal section of the elastically deformable element has a second displacement in a second direction having at least a component orthogonal to the longitudinal direction relative to the non-deformed state of the elastically deformable element.

In some embodiments a magnitude of the first displacement is different from a magnitude of the second displacement. In other embodiments a magnitude of the first displacement is the same as a magnitude of the second displacement. In some embodiments restorative forces associated with the deformation of the elastically deformable element tend to force the first and second rolling bearings into contact with the outer surface of the first tube.

In some embodiments the focusing system comprising one or more shafts, the one or more shafts extending between, and connected to, the elastically deformable element and the second tube to couple the elastically deformable element to the second tube. In some embodiments the elastically deformable element is shaped to define one or more holes at locations between the first and second sections, the one or more shafts extending through corresponding ones of the one or more holes in directions having directional components orthogonal to the longitudinal direction. In some embodiments the one or more shafts extend through one or more corresponding holes defined through the second tube.

In some embodiments at least one of the one or more shafts is threadably connected to at least one of: the elastically deformable element as the at least one of the one or more shafts extends through the corresponding one of the one or more holes defined in the elastically deformable element; and the second tube as the at least one of the one or more shafts extends through the corresponding one of the one or more holes defined through the second tube. In some embodiments the focusing system comprises a support component, the support component located between the outer surface of the first tube and the elastically deformable element and wherein the one or more shafts extend through one or more corresponding holes defined through the support component.

In some embodiments at least one of the one or more shafts is threadably connected to the support component as the at least one of the one or more shafts extends through the corresponding one of the one or more holes defined through the second tube.

At least one of the one or more shafts may be adjustable to alter a distance between the elastically deformable element and the second tube. Varying the distance between the elastically deformable element and the second tube may vary an amount of deformation of the elastically deformable element.

The focusing system may comrprise a shaft that extends between and is connected to the elastically deformable element and the second tube. The extension may be in a direction having a directional component orthogonal to the longitudinal direction. A position of the shaft relative to the second tube may be adjustable. Variation of the position of the shaft relative to the second tube may vary an amount of deformation of the elastically deformable member. The position of the shaft may be threadably adjustable relative to the second tube.

In some embodiments the focusing system comprises first and second bearing supports located at the first and second sections of the elastically deformable element and wherein the first and second bearing supports are shaped to constrain the rolling movement of the first and second rolling bearings along the outer surface of the first tube to the longitudinal direction. In some embodiments the first and second rolling bearings are substantially aligned with one another in the longitudinal direction.

In some embodiments the first and second rolling bearings comprising ball bearings or ball bearing assemblies. In some embodiments the bore-defining surface of the second tube is shaped to define a first support and a second support, the first and second supports extending in the longitudinal direction and having contact surfaces in contact with the outer surface of the first tube, the contact surfaces having shapes complementary to a shape of the outer surface of the first tube.

In some embodiments the first support and the second support are angularly spaced apart from one another about a longitudinally extending axis. In some embodiments the first and second supports are angularly spaced apart with a center-to-center angular spacing in a range of about 45°-180°. In some embodiments the center-to-center angular spacing is in a range of about 75°-150°. In some embodiments each of the first and second rolling bearings is angularly spaced apart equally from both the first support and the second support about the longitudinally extending axis.

In some embodiments each of the first and second rolling members is angularly spaced apart from each of the first and second supports by about 120° about the longitudinally extending axis. In some embodiments the focusing system comprises an orthogonal biasing system operative to apply an orthogonal force against the first tube, the orthogonal force oriented to have a component orthogonal to the longitudinal direction.

In some embodiments at least one of the orthogonal force and restorative forces associated with the deformation of the elastically deformable element maintain contact between the rolling bearings and the outer surface of the first tube. The orthogonal force and the restorative forces associated with the deformation of the elastically deformable element may be opposed to one another and may cooperate to maintain contact between the rolling bearings and the outer surface of the first tube.

In some embodiments at least one of the orthogonal force and restorative forces associated with the deformation of the elastically deformable element maintain the first tube and the second tube in a substantially co-axial relationship to thereby mitigate image drift. The orthogonal force and restorative forces associated with the deformation of the elastically deformable element may be opposed to one another and may cooperate to maintain the first tube and the second tube in a substantially co-axial relationship to thereby mitigate image drift.

In some embodiments the orthogonal biasing system comprises a compressed spring and a pressure plate connected directly or indirectly, through another fixed component, to a base of the focusing system.

In some embodiments the pressure plate is adjustably connected to the base to thereby control the amount of orthogonal force applied by the orthogonal biasing system. In some embodiments the focusing system comprises a focus-adjustment mechanism for transferring longitudinally oriented force between the first and second tubes, which causes the first and second tubes to move in the longitudinal directions relative to one another.

In some embodiments the focus-adjustment mechanism comprises: a friction bar coupled to the first tube, the friction bar comprising a friction surface; and a focus-adjustment shaft in contact with the friction surface and supported for rotation about a focus-adjustment axis that is substantially orthogonal to the longitudinal direction; wherein friction between the focus-adjustment shaft and the friction surface caused by rotation of the focus-adjustment shaft about the focus-adjustment axis creates the longitudinally oriented force between the first and second tubes.

In some embodiments the focus-adjustment mechanism comprises: a longitudinally extending toothed rack coupled to the first tube; and a focus-adjustment shaft comprising a gear engaged with the toothed rack, the focus-adjustment shaft supported for rotation about a focus-adjustment axis; wherein interaction between the gear and the toothed rack caused by rotation of the focus-adjustment shaft about the focus-adjustment axis creates the longitudinally oriented force between the first and second tubes.

In some embodiments the focus-adjustment axis is substantially orthogonal to the longitudinal direction. In some embodiments the focus-adjustment axis is oriented in the longitudinal direction and the gear is a worm gear. In some embodiments the orthogonal biasing mechanism applies the orthogonal force against the first tube via the focus-adjustment shaft. In some embodiments the orthogonal force is oriented in a direction that is orthogonal to both the longitudinal direction and the focus-adjustment axis. In some embodiments the orthogonal force has a directional component oriented in a direction that is orthogonal to both the longitudinal direction and the focus-adjustment axis.

In some embodiments the focusing system comprises a shaft support block defining a concavity wherein the focus-adjustment shaft is supported by the shaft support block within the concavity. In some embodiments the focusing system comprises one or more pivot joints and wherein the focus-adjustment shaft is supported for rotation about the focus-adjustment axis by the one or more pivot joints. In some embodiments the orthogonal force assists with facilitating rolling movement in the longitudinal direction of the rolling members along the outer surface of the first tube. In some embodiments the orthogonal force assists with mitigating sliding movement of the rolling members along the outer surface of the first tube.

It is emphasized that the invention relates to all combinations of the above features, even if these are recited in different claims.

Further aspects and example embodiments are illustrated in the accompanying drawings and/or described in the following description.

### BRIEF DESCRIPTION OF THE DRAWINGS

The accompanying drawings illustrate non-limiting example embodiments of the invention.
FIG. 1A schematically illustrates a cross-sectional view of conventional prior art focusing system along a cross-section that includes the longitudinally oriented optical axis.
FIG. 1B is a cross sectional view of the conventional prior art focusing system of FIG. 1A along line 1B-1B.
FIG. 2A schematically illustrates another conventional prior art focusing system.
FIG. 2B is a cross sectional view of the conventional prior art focusing system of FIG. 2A along line 2B-2B.
FIG. 3A schematically illustrates a cross sectional view of a focusing system according to an example embodiment along a cross-section that includes the longitudinally oriented optical axis.
FIG. 3B schematically illustrates a cross sectional view of the focusing system in FIG. 3A along line 3B-3B.
FIG. 4A is a side view of a deformable pressing plate according to an example embodiment.
FIG. 4B is a top view of a deformable pressing plate according to an example embodiment.
FIG. 5A and FIG. 5B schematically illustrate first and second configurations of a deformable pressing plate according to an example embodiment.
FIG. 6A and FIG. 6B schematically illustrate cross-sectional views of first and second configurations of a conventional prior art focusing system with a relatively large gap.
FIG. 7 schematically illustrates a cross-sectional view of a focusing system with a relatively large gap according to another example embodiment of the invention.
FIG. 8A and FIG. 8B schematically illustrate cross-sectional views of first and second configurations of a conventional prior art focusing system with a tapered moving tube.
FIG. 9 schematically illustrates a cross-sectional view of a focusing system with a tapered moving tube according to another example embodiment of the invention.
FIG. 10A and FIG. 10B schematically illustrate cross-sectional views of first and second configurations of a conventional prior art focusing system with a tapered fixed tube.
FIG. 11 schematically illustrates a cross-sectional view of a focusing system with a tapered fixed tube according to another example embodiment of the invention.
FIG. 12A shows the orientation of the optical axis in conventional prior art systems.
FIG. 12B shows the orientation of the optical axis in example embodiments of the invention.

### DETAILED DESCRIPTION

Throughout the following description, specific details are set forth in order to provide a more thorough understanding of the invention. However, the invention may be practiced without these particulars. In other instances, well known elements have not been shown or described in detail to avoid unnecessarily obscuring the invention. Accordingly, the specification and drawings are to be regarded in an illustrative, rather than a restrictive sense.

A focusing system for an optical instrument such as a telescope is disclosed. The focusing system may comprise an elastically deformable element (e.g. an elastically deformable pressing plate) extending in a longitudinal direction. The elastically deformable element (pressing plate) may comprise a first ball bearing, a first ball bear assembly or other rotatable bearing at a first longitudinal end and a second ball bearing, second ball bearing assembly or other rotatable bearing at a second longitudinal end. The ball (rollable) bearing assemblies may be in contact with an outer surface of an inner tube and facilitate the relative movement between the inner tube and an outer tube. Restorative forces associated with deformation of the elastically deformable element (e.g. pressing plate)) may force the ball bearing assemblies into contact with the outer surface of the inner tube. A shaft may extend between the outer tube and the elastically deformable member and may control an amount of deformation of the elastically deformable member and a corresponding amount of restorative deformation. The shaft may be threaded and may be threadably adjustable relative to the elastically deformable member and/or the outer tube.

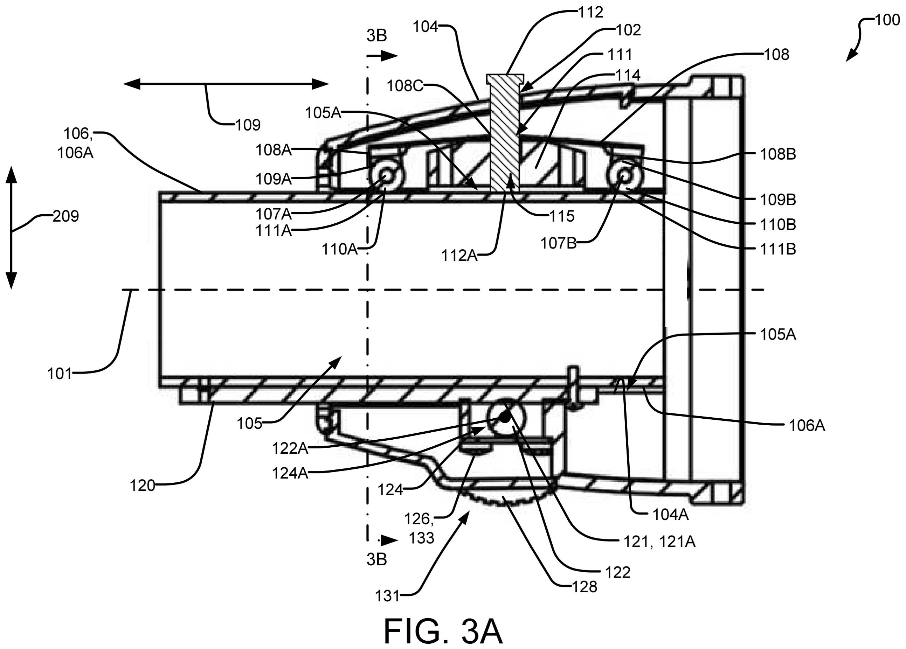

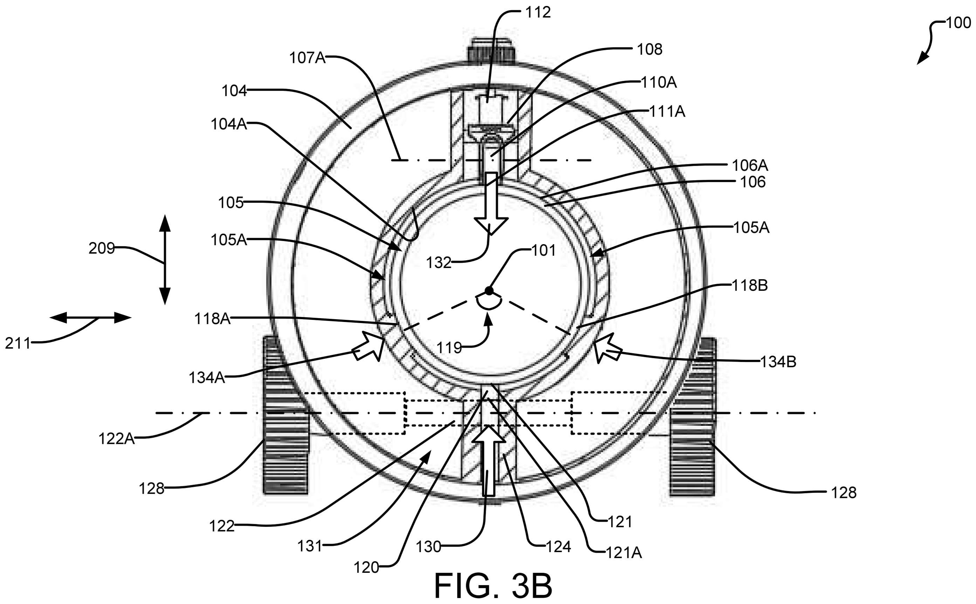

FIG. 3A schematically illustrates a focusing system 100 according to an example embodiment of this invention. FIG. 3B is a cross sectional view of focusing system 100 of FIG. 3A along line 3B-3B shown in FIG. 3A.

Focusing system 100 comprises a fixed tube 104 and a moving tube 106 moveablely coupled to fixed tube 104 for relative movement between fixed tube 104 and moving tube 106. In the illustrated embodiment, fixed tube 104 and moving tube 106 are both generally tubular-shaped and extend in a longitudinal direction (indicated by double-headed arrow) 109. Moving tube 106 may be moved in longitudinal direction 109 relative to fixed tube 104.

Because of the features of focusing system 100 (described in more detail below), this relative movement between fixed tube 104 and moving tube 106 in longitudinal directions 109 is facilitated while maintaining an orientation between fixed tube 104 and moving tube 106 that is generally co-axial and relatively closer to co-axial than prior art focusing systems - i.e. during this relative movement between fixed tube 104 and moving tube 106 in longitudinal directions 109, fixed tube 104 and moving tube 106 are relatively close to co-axial (along axis 101) compared to prior art focusing systems. It will be appreciated that deviation from such a co-axial orientation (particularly, but not limited to, during relative movement between a moving tube and fixed tube) is associated with image drift. Consequently, by maintaining an orientation between fixed tube 104 and moving tube 106 that is relatively closer to co-axial than prior art focusing systems, focusing system 100 mitigates image drift relative to prior art focusing systems.

In the FIG. 3A embodiment, fixed tube 104 has a diameter greater than that of moving tube 106. Fixed tube 104 is shaped to define a bore 105 and moving tube 106 may extend into bore 105 along longitudinal directions 109. A gap 105A may be provided between an outer circumferential surface 106A of moving tube 106 and an inner bore-defining surface 104A of fixed tube 104 (e.g. by suitably shaping surfaces 104A, 106A). In other embodiments, fixed tube 104 may have a diameter smaller than that of moving tube 106, so that fixed tube 104 extends into a bore of moving tube 106.

Optical element(s) (not illustrated in FIG. 3A) may be coupled to and/or supported by moving tube 106. In some embodiments, an optical element may comprise (or may be shaped to define) a bore and moving tube 106 may extend into the bore of optical element and bear against a bore-defining surface of the optical element to thereby support the optical element. In other embodiments, optical element(s) may be additionally or alternatively mounted to and/or supported by moving tube 106 using any suitable technique. When the position of moving tube 106 is adjusted (relative to fixed tube 104) along longitudinal directions 109, the position of the optical element(s) move with moving tube 106, thus achieving focus adjustment. In some embodiments, the optical element(s) may comprise a mirror.

Referring to FIG. 3A, focusing system 100 comprises an elastically deformable member 108 (in the illustrated embodiment and referred to herein without loss of generality as a pressing plate 108). Pressing plate 108 extends generally longitudinally along longitudinal directions 109 between a first longitudinal end 108A and a second longitudinal end 108B. Pressing plate 108 may also have some extension in transverse directions orthogonal to longitudinal directions 109. Pressing plate 108 comprises a first bearing support 109A at first end 108A supporting a first bearing 110A and a second bearing support 109B at second end 108B supporting a second bearing 110B. First bearing 110A may be rotatable about a first bearing axis 107A and second bearing 110B may be rotatable about a second bearing axis 107B. Bearing axes 107A and 107B extend into and out of the page in the FIG. 3A view and are generally orthogonal to longitudinal directions 109. In some embodiments bearings 110A and 110B may comprise or be ball bearings or ball bearing assemblies. Ball bearings operate with points of contact (rather than lines of contact) and consequently, ball bearings tend to exhibit less friction compared to rollers. Therefore, movement facilitated by ball bearings may tend to be smoother than movement facilitated by rollers.

Bearing supports 109A, 109B may support bearings 110A, 110B using any of a variety of mechanisms. In some embodiments pressing plate 108 is shaped to define a groove or concavity at each end 108A and 108B and bearings 110A and 110B fit respectively into each groove/concavity at ends 108A and 108B. In some embodiments pressing plate 108 may comprise an axle at each end 108A and 108B extending through bearings 110A and 110B such that each of bearings 110A and 110B rotates about the respective axle. It will be appreciated that other suitable mechanisms may be provided to support bearings 110A, 110B to allow the functionality described herein.

Pressing plate 108 is shaped to define one or more boreholes 111 in a mid region 108C of pressing plate 108 between ends 108A, 108B. In the illustrated embodiment, one such borehole 111 is provided. Fixed tube 104 is shaped to define one or more corresponding boreholes 102 substantially aligned with corresponding boreholes 111 at corresponding longitudinal positions. In the illustrated embodiment of FIG. 3A, a single borehole 102 in fixed tube 104 is aligned in a longitudinal position with borehole 111 in pressing plate 108.

Focusing system 100 comprises a shaft 112 configured to extend in directions 209 (orthogonal to longitudinal directions 109) into and through both borehole 102 of fixed tube 104 and into and through borehole 111 of pressing plate 108. Shaft 112 may be threadably engaged with fixed tube 104 and/or pressing plate 108. Shaft 112 may be of a cross-sectional dimension such that shaft 112 fits tightly within boreholes 102 and 111 and may secure pressing plate 108 to fixed tube 104 such that there is little to no relative movement in longitudinal directions 109 between fixed tube 104 and pressing plate 108 when focusing system 100 is in operation. It will be appreciated that where there are multiple boreholes 102, 111, there may be multiple corresponding shafts 112.

In some embodiments focusing system 100 comprises a support component 114. Support component 114 may be shaped to define a borehole 115 where borehole 115 is substantially aligned with boreholes 102 and 111 such that shaft 112 extends into and, optionally, through borehole 115. Support component 114 may help secure pressing plate 108 in position and may support mid region 108C of pressing plate 108. In some embodiments, support component 114 may be connected to (e.g. welded or otherwise fastened) and/or integrally formed with pressing plate 108. Shaft 112 may optionally extend (e.g. threadably) through borehole 115 into gap 105A. In some embodiments, shaft 112 extends until an end 112A of shaft 112 bears against an outer surface 106A of moving tube 106, although this is not necessary.

Pressing plate 108 may be elastically deformable. In some embodiments, pressing plate is deformed from its natural (non-stressed) state when used in focusing system 100, such that restorative forces (i.e. forces that tend to restore pressing plate 108) to its natural state, tend to force bearings 110 against outer surface 106A of moving tube 106. Such restorative force may cause bearing 110 to roll (as opposed to slide) relative to outer surface 106A of moving tube 106. Pressing plate 108 may have a natural (non-stressed) state, where it is relatively more curved (e.g. smaller radius of curvature) and when deformative forces are applied to pressing plate 108 (for use in focusing system 100), pressing plate 108 may be relatively less curved (e.g. relatively flat and/or larger radius of curvature).

Shaft 112 may calibrate the deformation of elastically deformable pressing plate 108 by adjusting the distance between (relatively more deformable) pressing plate 108 and (relatively rigid or less deformable) fixed tube 104 - e.g., through threadable engagement of shaft 112 with fixed tube 104 and the engagement of shaft 112 with pressing plate 108 and/or support component 114. For example, shaft 112 may be adjusted such that the distance between pressing plate 108 and fixed tube 104 is relatively large, which in turn causes relatively more deformation of pressing plate 108 and relatively large restorative forces which result is relatively large forces applied by bearings 110 against outer surface 106A of moving tube 106. Conversely, , shaft 112 may be adjusted such that the distance between pressing plate 108 and fixed tube 104 is relatively small, which in turn causes relatively less deformation of pressing plate 108 and relatively small restorative forces which result is relatively small forces applied by bearings 110 against outer surface 106A of moving tube 106.

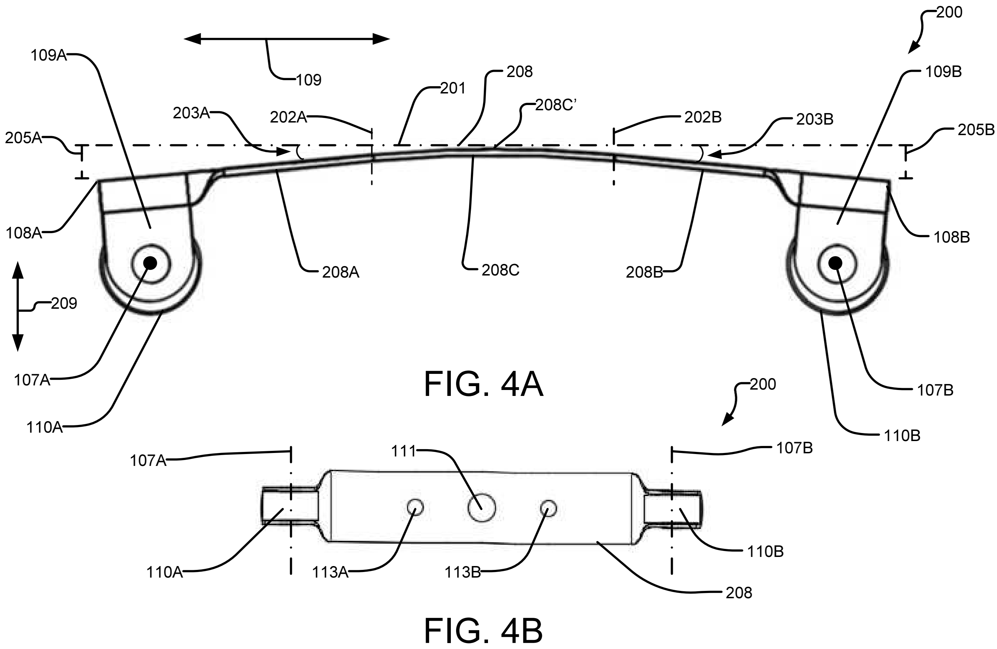

FIG. 4A schematically illustrates a side view of an example embodiment 200 depicting an elastically deformable pressing plate 208. FIG. 4B shows a top view of deformable pressing plate 208 in accordance with example embodiment 200.

Pressing plate 208 is substantially similar to pressing plate 108 depicted in FIG. 3A. Therefore, similar and/or identical components are indicated with the same references in FIG. 4A and FIG. 4B. Pressing plate 208 may be used to provide pressing plate 108 in focusing system 100 (IFGs. 3A, 3B) or any of the other focusing systems of the various embodiments of the invention described herein. Pressing plate 208 may be notionally partitioned into a first section 208A which includes first end 108A, a second section 208B which includes second end 108B and a middle section 208C located between first and second sections 208A, 208B. In illustrated FIG. 4A, sections 208A-C are shown as being notionally partitioned by dashed lines 202A and 202B. First section 208A comprises first bearing support 109A supporting first bearing 110A. Second section 208B comprises second bearing support 109B supporting second bearing 110B.

In the FIG. 4A embodiment, middle section 208C (and parts of first section 208A) may be angled and/or curved away from a reference level plane 201 such that first section 208A (or a plane tangent to first section 208A) forms an angle 203A with reference level 201. Reference level 201 may be substantially parallel with longitudinal directions 109. Reference level plane 201 may be tangent to an apex or mid-line 208C' of middle section 208C. Due to angle 203A and/or the curvature of pressing plate 208, first end 108A may be displaced along direction 209 from reference level plane 201 by a distance of 205A. Similarly, middle section 208C (and parts of section 208B) may be angled and/or curved away from reference level plane 201 such that second section 208B (or a plane tangent to first section 208B) forms an angle 203B with reference level 201. Due to angle 203B and/or the curvature of pressing plate 208, second end 108B may be displaced along direction 209 from reference level plane 201 by a distance of 205B.

When first section 208A and/or second section 208B are subject to external forces, the external forces may deform pressing plate 208 and may cause distances 205A and 205B, angles 203A, 203B and/or the curvature of pressing plate 208 to vary. In some embodiments, pressing plate 208 may be deformed by a relatively large amount (when compared to the amount shown in FIG. 4A), such that it becomes more parallel with reference level plane 201 than the configuration shown in FIG. 4A - e.g. so that one or both of distances 205A, 205B are reduced, such that one or both of angles 203A, 203B are reduced and/or such that an effective (or average) radius of curvature of pressing plate 208 is increased.

FIG. 4B shows a top view of deformable pressing plate 208. Deformable pressing plate 208 may be shaped to define secondary boreholes 113A and 113B in addition to borehole 111. Secondary shafts (not shown) may then extend into and/or through boreholes 113A and 113B respectively as well as into corresponding secondary boreholes in support component 114 and possibly into secondary boreholes in fixed tube 104 to help to secure pressing plate 208 or 108 to and/or against fixed tube 104. In some embodiments, fasteners (not shown) may extend through secondary boreholes 13A, 13B to coupled or connect pressing plate 208 to support component 114.

Referring again to FIG. 3A and FIG. 3B, focusing system 100 may comprise focus-adjustment mechanism 131 which facilitates movement of moving tube 106 relative to fixed tube 104 in longitudinal directions 109.

There are a variety of focus-adjusting mechanisms known in the art. The illustrated embodiment of FIG. 3A and FIG. 3B depicts one non-limiting example of a focus-adjusting mechanism 131 known in the art. It is to be understood that other focus-adjustment mechanisms known in the art may also be applied to the disclosed embodiments.

Focus-adjustment mechanism 131 of focusing system 100 comprises a friction bar 120 fixedly coupled to or integrally formed with) moving tube 106 (i.e. to move with moving tube 106 relative to fixed tube 104) and a focus-adjustment shaft 122 adjacent to, and in contact with, a friction surface 121 (of friction bar 120) at contact point 121A. Focus-adjustment shaft 122 may be rotated about its axis 122A (which extends into and out of the page in the FIG. 3A view and horizontally in the FIG. 3B view and which is generally orthogonal to directions 109 and 209) by a user or by the motor of an auto-focusing system to adjust the focus of focusing system 100 by causing moving tube 106 to move relative to fixed tube 104 in longitudinal directions 109.

When focus-adjustment shaft 122 rotates, a friction force oriented in one of longitudinal directions 109 is generated on friction surface 121 of friction bar 120 and causes corresponding longitudinal movement of moving tube 106 relative to fixed tube 104. Rotation of focus-adjustment shaft 122 about its axis 122A in a first angular direction generates a friction force and corresponding movement of moving tube 106 in a first longitudinal direction 109. Rotation of focus-adjustment shaft 122 about its axis 122A in a second (opposing) angular direction generates a friction force and corresponding movement of moving tube 106 in a second longitudinal direction 109 that is opposite to the first longitudinal direction.

Focus-adjustment mechanism 131 further comprises a support 124 shaped to support focus-adjustment shaft 122 in a fixed translational relationship with fixed tube 104, while permitting rotation of focus-adjustment shaft 122 about its axis 122A and corresponding translational movement of friction bar120 and moving tube 106 relative to fixed tube 104 along longitudinal directions 109. Support 124 may comprise one or more pivot joints (not expressly shown) through which focus-adjustment shaft 122 may extend to facilitate rotation of focus-adjustment shaft 122 about its axis 122A. Knob(s) 128 may be coupled to focus-adjustment shaft 122 such that rotation of knob 128 about axis 122A by an external force (e.g. by a user or by a motor) causes focus-adjustment shaft 122 to rotate about axis 122A.

In some embodiments friction bar 120 comprises a gear rack and focus-adjustment shaft 122 comprises a complementary gear which engages the gear rack of friction bar 120 to turn the rotation of focus-adjustment shaft 122 into linear movement in longitudinal directions 109. In some embodiments, focus-adjustment shaft 122 may comprise a worm gear, which would allow focus-adjustment shaft 122 to have an orientation that is different than shown in FIG. 3A and 3B - e.g. focus adjustment shaft 122 could extend in longitudinal directions 109 for rotation about an axis oriented in longitudinal directions 109. As discussed above, other additional or alternative focus-adjustment mechanisms may be provided for use with the disclosed embodiments (e.g. to move the moveable tube and fixed tube relative to one another).

Focusing system 100 may also comprise an orthogonal biasing mechanism 133 operative to apply an orthogonal force 130 (schematically illustrated using an arrow in FIG. 3B) against moving tube 106 in direction 209. The direction of such orthogonal force 130 may oppose the direction of restorative forces associated with the deformation of pressing plate 108. In operation, it may be desirable to cause bearings 110A and 110B to be in contact with outer surface 106A of moving tube 106 at regions of contact 111A and 111B respectively when moving tube 106 moves relative to fixed tube 104. The contact between the bearings 110A, 110B and outer surface 106A of moving tube 106 allows focusing system 100 to facilitate smooth relative movement between fixed tube 104 and moving tube 106 along longitudinal directions 109. When moving tube 106 is made to move relative to fixed tube 104 along longitudinal directions 109, bearings 110A, 110B may rotate about their respective rotational axes 107A, 107B (also shown in FIG. 4B). Orthogonal biasing mechanism 133 (and/or the restorative force associated with the deformation of pressure plate 108) may provide forces which keeps bearings 110A, 110B in contact with outer surface 106A of moving tube 106.

In the illustrated embodiment, orthogonal biasing mechanism 133 shares components with focus-adjustment mechanism, although this is not necessary. Orthogonal biasing mechanism 133 comprises a biasing mechanism or forcer 126 which may be configured to generate force 130 that pushes focus-adjustment shaft 122 into and against friction bar 102. Because of the contact between moving tube 106 and friction bar 120, these forces are in turn transmitted to and applied against moving tube 106, so that moving tube 106 (and in particular external surface 106A) is forced against bearings 110A, 110B. In some embodiments, forcers 126 may comprise spring-biased forcers wherein the springs are deformed and exert restorative force 130 as they try to restore themselves back to their normal (non-deformed) states. In some embodiments, forcers 126 may comprise threadable members which may be threaded (e.g. into a suitable component of system 100) that is a part of and/or rigidly mounted to fixed tube 104) to achieve different positions (e.g. in directions 209) to exert static force 130 on moving tube 106. In other embodiments, orthogonal bias mechanism 133 may additionally or alternatively comprise and/or be otherwise implemented by other suitable components which may be configured to provide force 130 against moving tube 106.

Bearings 110A and 110B may also exert a force 132 (schematically illustrated using an arrow in FIG. 3B) on moving tube 106. The source of force 132 may be the elastic restoration force associated with pressing plate 208 when deformed (i.e. when deformable pressing plate 208 is deformed/bent, an elastic restoration force builds up in deformable pressing plate 208 which tends to restore deformable pressing plate 208 to its original shape).

FIG. 3B depicts the force relationships in focusing system 100 due to orthogonal biasing mechanism 133 (which exerts force 130 on moving tube 106) as well as pressing plate 208 (which exerts generally opposed restorative force 132 on moving tube 106).

Still referring to FIG. 3B, bore-defining surface 104A of fixed tube 104 of focusing system 100 may be shaped to define a plurality (in the illustrated embodiment, a pair) of supports 118A, 118B. Supports 118A, 118B extend through gap 105A (e.g. in directions toward axis 101) until making contact with outer surface 106A of moving tube 106. Because supports 118A, 118B extend further toward axis 101 than other parts of bore-defining surface 104A, supports 118A, 118B may help to create gap 105A. In some embodiments, supports 118A, 118B may extend the same length as fixed tube 104 in longitudinal directions 109 although this is not necessary.

Supports 118A, 118B may be angularly spaced apart from one another about axis 101 with a center-to-center angle of separation 119. In some embodiments, angle of separation 119 is in a range of 45°-180°. In some embodiments angle of separation 119 may be in a range of 75°-150°. In some embodiments, bearings 110A or 110B and supports 118A, 118B may be relatively oriented such that they form the vertices of an isosceles triangle in a cross-sectional plane orthogonal to longitudinal directions 109. In other embodiments bearings 110A or 110B and supports 118A, 118B may be relatively oriented such that they form the vertices of an equilateral triangle in a cross-sectional plane orthogonal to longitudinal directions 109.

Supports 118A, 118B may respectively exert forces 134A, 134B against moving tube 106 in directions orthogonal to their respective surfaces of contact (schematically represented by arrows 134A, 134B in FIG. 3B). Forces 134A, 134B may be reaction forces to force 132. Each of forces 134A, 134B has a first force component oriented along directions 209 and a second force component oriented along directions 211. Absent force 130, the sum of first force components along directions 209 of forces 134A, 134B may be of equal magnitude (after accounting for gravity) and opposite direction to force 132. The sum of second force components along directions 211 of forces 134A, 134B is zero. In other words, forces 132, 134A and 134B are in equilibrium. When force 130 is applied (e.g. by orthogonal bias mechanism 133), pressing plate 108 may be further deformed, causing an increase in the magnitude of force 132 (e.g. restorative force) by an amount equal to magnitude of force 130 to maintain equilibrium.

The use of bearings 110A and 110B with deformable pressing plate 208 may reduce overall friction of system 100 compared to, for example, prior art system 10.

Referring again to FIG. 1A and FIG. 1B, in prior art system 10, forces F1, F2 and F3 (FIG. 1B) are exerted on moving tube 6. Accordingly, three corresponding frictional forces f1, f2 and f3 (FIG. 1A) are generated respectively from forces F1, F2 and F3 when moving tube 6 is made to move relative to fixed tube 4 along longitudinal directions 9 by force F4. Applied force F4 may be a result of the focus-adjustment mechanism of prior art focusing system 10 (e.g. by interaction between a gear and a gear rack). The focus-adjustment mechanism of prior art focusing system 10 may also exert force N1 on moving tube 6. Because of the present of applied force N1, the magnitude of force F1 has to increase to F1+N1 in order to maintain the equilibrium (shown in FIG. 1A).

If the coefficient of sliding friction at the point of contact for forces F1+N1, F2 and F3 are µ1, µ2 and µ3 respectively, then the overall frictional force on moving tube 6 may be modeled to be f1+f2+f3 where f1=µ1*(F1+N1), f2=µ2*F2, and f3=µ3*F3. For moving tube 6 to move smoothly relative to fixed tube 4, F4 needs to be significantly larger than f1+f2+f3.

Comparing prior art system 10 to system 100 of FIGs. 3A, 3B, force 132 may be set to equal to F1, force 134A may be set to equal to F2, force 134B may be set to equal to F3 and force 130 may be set to equal to N1. Therefore, under the same magnitudes of forces, the total frictional force on moving tube 106 may be modeled to be f4+f2+f3 where f4=µ4*(F1+N1), f2=µ2*F2, and f3=µ3*F3, where µ4 is a coefficient of rolling friction. The difference between the total frictional force of system 10 and system 100 is between f1 and f4. More specifically, the difference between f1 and f4 lies in the difference between the coefficient of sliding friction µ1 and the coefficient of rolling friction µ4. µ4 may be considered to be the coefficient of rolling friction between bearings 110A, 110B and outer surface 106A of moving tube 106. µ1 is the coefficient of sliding friction between inner surface 4A of fixed tube 4 and outer surface 6A of moving tube 6. µ4 may be much smaller (about two orders of magnitude) than µ1 which may be based, at least in part, on the smooth surfaces of bearings 110A and 110B and the elastic contact with outer surface 106A that is provided by the restorative force of pressing plate 108, 208. In some embodiments µ4 may be in a range of about 0.001 to about 0.0015. In comparison, µ1 is typically at least 0.4.

Consequently, the total frictional force on moving tube 106 may be smaller than the total frictional force on moving tube 6, because f4 may be about two orders of magnitude smaller than f1. As a result, system 100 generates smoother focus adjustment experience for a user than system 10. Moreover, system 100 also has the additional benefit of generating less wear (e.g. the mating surfaces of the moving and fixed tubes) over time. The larger frictional forces in system 10 may cause more rapid wear on the mating surfaces of fixed tube 4 and moving tube 6. Such wear may cause fixed tube 4 and moving tube 6 to be less co-axial over time and thus contribute to image drift over time.

Another aspect of the technology relates to maintaining co-axial or level focus adjustment (e.g. mitigating image drift) through the use of a pressing plate.

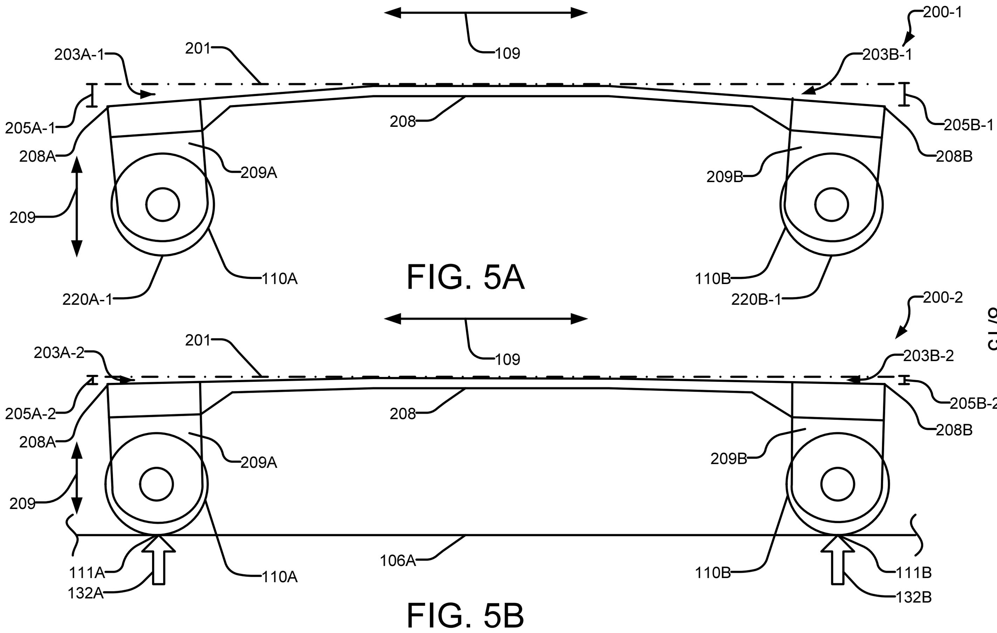

FIG. 5A schematically illustrates pressing plate 208 in a first configuration 200-1 and FIG. 5B schematically illustrates pressing plate 208 in a second configuration 200-2 in accordance with an example embodiment.

In configuration 200-1, pressing plate 208 may be in what is called a "neutral position" (i.e. not subject to any exterior force other than gravity). First section 208A (or a plane tangent to first section 208A) and second section 208B (or a plane tangent to second section 208B) may form respective angles 203A-1 and 203B-1 with reference level plane 201 such that first section 208A is displaced from reference level plane 201 along directions 209 by a distance 205A-1 and second section 208B is displaced from reference level plane 201 along directions 209 by a distance 205B-1. The portion of bearing 110A furthest away from reference level 201 may be referred to as outer edge 220A-1. Similarly, the portion of bearing 110B furthest away from reference level 201 may be referred to as outer edge 220B-1.

Configuration 200-2 depicts pressing plate 208 in a circumstance where pressing plate 208 is deformed by engagement with moving tube 106 of focusing system 100 (and by the distance between pressing plate 208 and fixed tube 104 maintained by shaft 112 (not shown)). In configuration 200-2, pressing plate 208 makes contact with outer surface 106A of moving tube 106. Outer surface 106A may be adjacent to and in contact with bearing 110A at a region of contact 111A and with bearing 110B at a region of contact 111B. The contact of outer surface 106A with pressing plate 208 (through bearings 110) may deform pressing plate 208. For example, a force 132A may act on bearing 110A at region of contact 111A along directions 209. Similarly, a force 132B may act on bearing 110B at region of contact 111B along directions 209. Forces 132A and 132B may be resultant forces from force 132 (shown in FIG. 3A and FIG. 3B) - e.g. restorative forces. Lubricants may be applied on bearings 110A, 110B and/or outer surface 106A of moving tube 106 to facilitate smooth relative movement between fixed tube 104 and moving tube 106.

Due to the presence of forces 132A and 132B, pressing plate 208 may be elastically deformed such that first and second sections 208A and 208B are displaced in configuration 200-2 when compared to configuration 200-1. First section 208A (or a plane tangent to first section 208A) may form a new angle 203A-2 with reference level plane 201 corresponding to a distance 205A-2 along directions 209 and second section 208B (or a plane tangent to second section 208B) may form a new angle 203B-2 with reference level plane 201 corresponding to a distance of 205B-2 along directions 209. In configuration 200-2, angle 205A-2 may be smaller in magnitude when compared to angle 203A-1 in configuration 200-1 of FIG. 5A. Similarly, angle 205B-2 may be smaller in magnitude when compared to angle 203B-1 in configuration 200-1 of FIG. 5A. Accordingly, distance 205A-2 may be smaller in magnitude than distance 205A-1 in configuration 200-1 and distance 205B-2 may be smaller in magnitude than distance 205B-1 in configuration 200-1. In configuration 200-2 of FIG. 5B, an average radius of curvature of pressing plate 208 may be greater than that of pressing plate 208 in configuration 200-1 of FIG. 5A.

Advantageously, pressing plate 208 may be manufactured to have a neutral shape such that when pressing plate 208 is affixed to moving tube 104, bearings 110A, 110B are brought into contact with outer surface 106A of moving tube 106 and pressing plate 208 is deformed. Compared to conventional designs, the elastically deformable pressing plates as described in various embodiments herein, through deformation, can ensure contact between bearings 210A, 210B and outer surface 106A of moving tube 106. Such contact may ensure that tubes 104, 106 maintain a co-axial relationship (at axis 101) thereby mitigating image drift.

The embodiments described in this disclosure have a number of advantages over prior art focusing systems. Some of these advantages will be illustrated below with comparisons between various prior art systems and example embodiments.

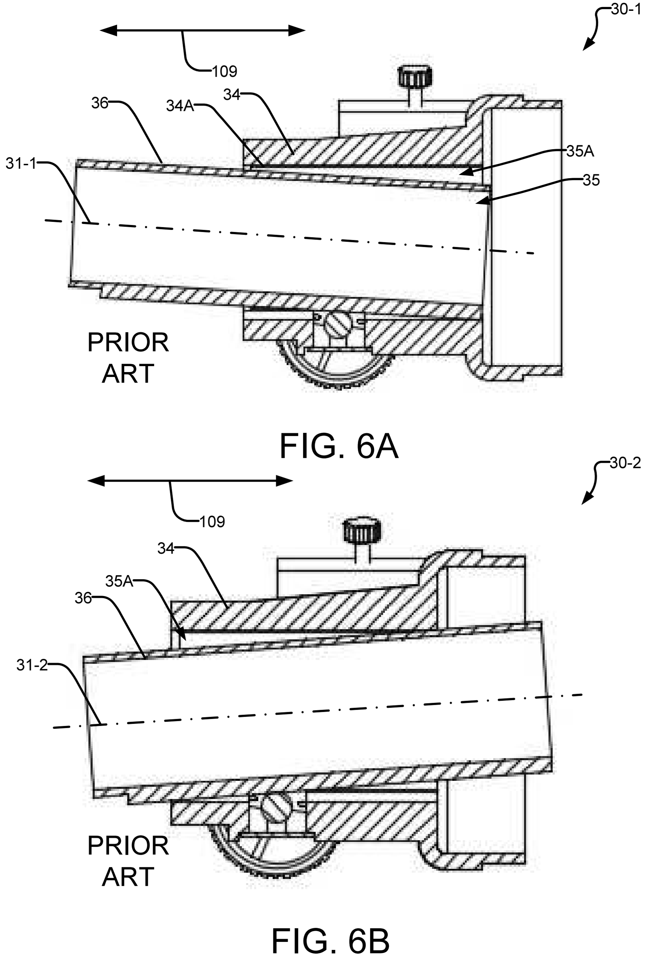

FIG. 6A and FIG. 6B respectively schematically illustrate configurations 30-1 and 30-2 of a conventional focusing system 30.

Focusing system 30 is of generally the same design as conventional focusing system 10 shown in FIG. 1A and FIG. 1B. Focusing system 30 differs from focusing system 10 in that bore 35 defined by bore-defining surface 34A of fixed tube 34 has a radius sizably larger than the radius of moving tube 36. As a result, a relatively large gap 35A forms between fixed tube 34 and moving tube 36. Consequently, the orientation of moving tube 36 (relative to that of fixed tube 34) may vary within bore 35 and moving tube 36 may not be as co-axial with fixed tube 34 as it could be.

In configuration 31-1, moving tube 36 is oriented in a direction with an optical axis 31-1. In configuration 31-2, as moving tube 36 moves relative to fixed tube 34 in longitudinal directions 109. As a result of the movement, moving tube may be oriented in a new direction with an optical axis 31-2 that is different from the orientation of axis 31-1. The varying orientation of moving tube 36 in bore 35 may cause jamming during operation of system 30. Furthermore, the varying orientation of the optical axis 31-1, 31-2 of moving tube 36 during operation of system 30 may cause image drift.

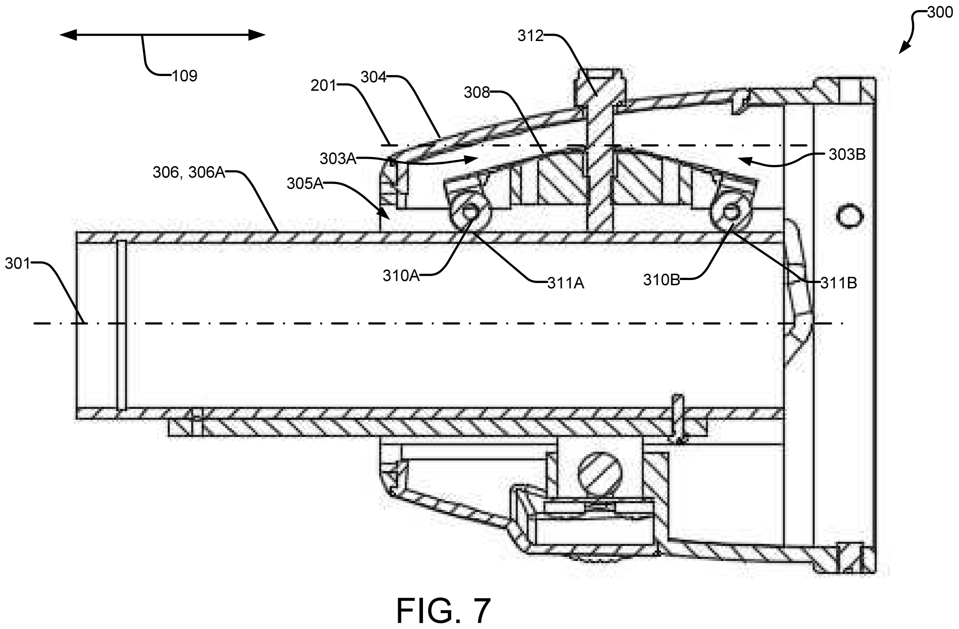

In contrast, the designs disclosed herein may improve the functioning of a focusing system with a large gap between a moving tube and a fixed tube. FIG. 7 shows a focusing system 300 according to an example embodiment.

The principle of operation of focusing system 300 is generally similar to system 100 and features of system 100 described herein should be considered to be applicable to system 300 unless the context indicates otherwise. In system 300, there is a relatively large gap 305A between fixed tube 304 and moving tube 306. Gap 305A may be due to manufacturing imprecision. System 300 comprises a deformable pressing plate 308 secured to fixed plate 304 by shaft 312. Deformable pressing plate 308 comprises a pair of bearings 310A and 310B at the respective ends of deformable pressing plate 308.

System 300 may compensate for the relatively large gap 305A with deformable pressing plate 308 shaped to form relatively large angles 303A and 303B with reference level plane 201 to allow bearings 310A and 310B to make contact with outer surface 306A of moving tube 306 at regions of contact 311A and 311B respectively. Additionally shaft 312 may optionally extend into gap 305A until shaft 312 makes slight contact with outer surface 306A of moving tube 306 to provide further support in maintaining the orientation of moving tube 306. Restorative forces associated with the deformation of pressing plate 308 act through bearings 310A and 310B to facilitate smooth movement between fixed tube 304 and moving tube 306 as well as ensure an optical axis 301 of moving tube 306 remains consistently and coaxially oriented.

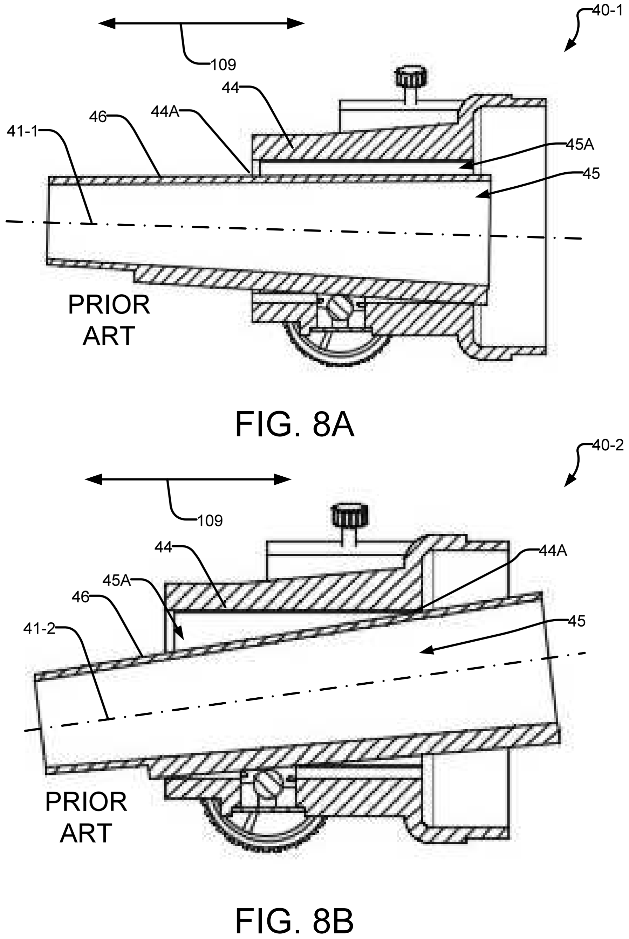

FIG. 8A and FIG. 8B respectively schematically illustrate configurations 40-1 and 40-2 of a conventional focusing system 40.

Focusing system 40 is of generally the same design as conventional focusing system 10 shown in FIG. 1A and FIG. 1B. Focusing system 40 differs from focusing system 10 in that moving tube 46 is not perfectly tubular and tapers from one end to the other. In other words, the radius of moving tube 46 is different at various longitudinal positions along longitudinal directions 109. As a result, when moving tube 46 moves relative to fixed tube 44 in longitudinal directions 109, the orientation of moving tube 46 (relative to that of fixed tube 44) may vary and moving tube 46 may not be as co-axial with fixed tube 44 as desired because movement of moving tube 46 along longitudinal directions 109 is not perfectly parallel to longitudinal directions 109.

As shown in FIG. 8A and FIG. 8B as moving tube 46 moves from configuration 40-1 to configuration 40-2, optical axis 41-1 has an orientation different from optical axis 41-2. The varying orientation of moving tube 46 relative to fixed tube 44 may cause jamming during operation of system 40. Furthermore, the varying orientation of optical axis 41 during operation of system 40 may cause image drift.

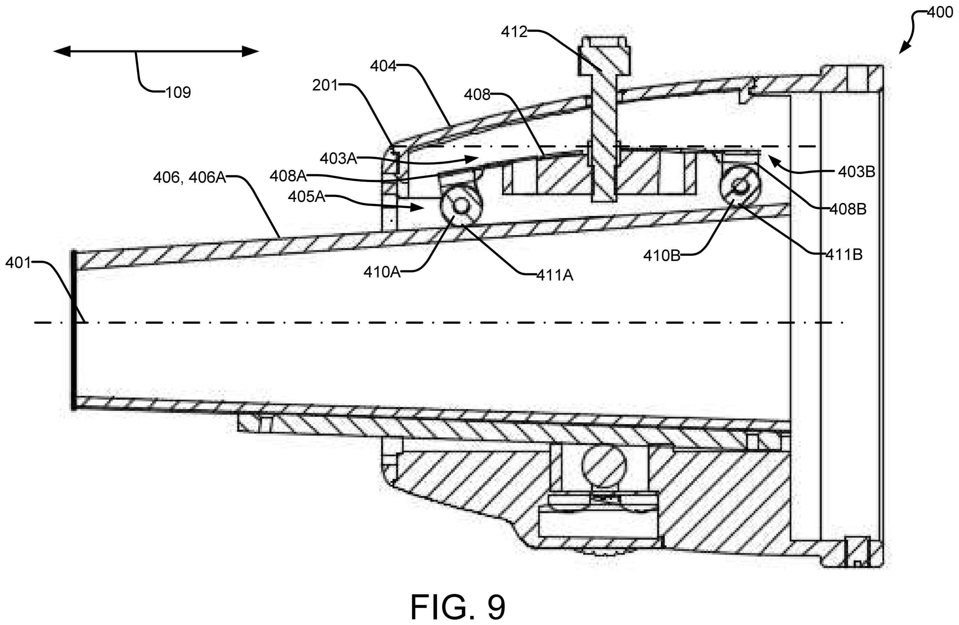

In contrast, the designs disclosed herein may improve the functioning of a focusing system with a moving tube that tapers from one end to the other. FIG. 9 shows a focusing system 400 according to an example embodiment.

The principle of operation of focusing system 400 is generally similar to system 100 and features of system 100 described herein should be considered to be applicable to system 400 unless the context indicates otherwise. In system 400, moving tube 406 tapers from one end to the other (i.e. the radius of moving tube 406 is different at various longitudinal locations along longitudinal directions 109). Deformable pressing plate 408 of focusing system 400, which is affixed to fixed tube 404 by shaft 412, may compensate for the tapering of moving tube 406 to ensure that optical axis 401 maintains a more consistent orientation when compared to optical axis 41 of prior art system 40.

Deformable pressing plate 408 compensates for the tapering moving tube 406 by allowing first end 408A (or a first section on one longitudinal side of shaft 412) to have a different degree of deformation from second end 408B (or a second section on a second (opposed) longitudinal side of shaft 412) and/or by otherwise shaping pressing plate 408 to be asymmetric. In FIG. 9, first section 408A (or a plane tangent to first section 408A) deforms to form an angle 403A with reference level plane 201 and second section 408B (or a plane tangent to second section 408B) deforms to form an angle 403B with reference level 201. Angle 403A (and the corresponding space between bearing 410A and reference level plane 201) is larger than angle 403B (and the corresponding space between bearing 410B and reference level plane 201) in FIG. 9 to allow both bearing 410A, which is coupled to pressing plate 408 at first section 408A, and bearing 410B, which is coupled to pressing plate 408 at second section 408B to make contact with outer surface 406A of moving tube 406 respectively at regions of contact 411A and 411B.

As moving tube 406 moves relative to fixed tube 404, angles 403A and 403B may adjust due to the elasticity of deformable pressing plate 408 and the restorative forces ensure that bearings 410A and 410B maintain contact with outer surface 406A of moving tube 406 throughout the movement, and therefore, ensuring a consistent orientation of optical axis 401 that is substantially parallel to longitudinal directions 109, thereby mitigating image drift relative to prior art systems.

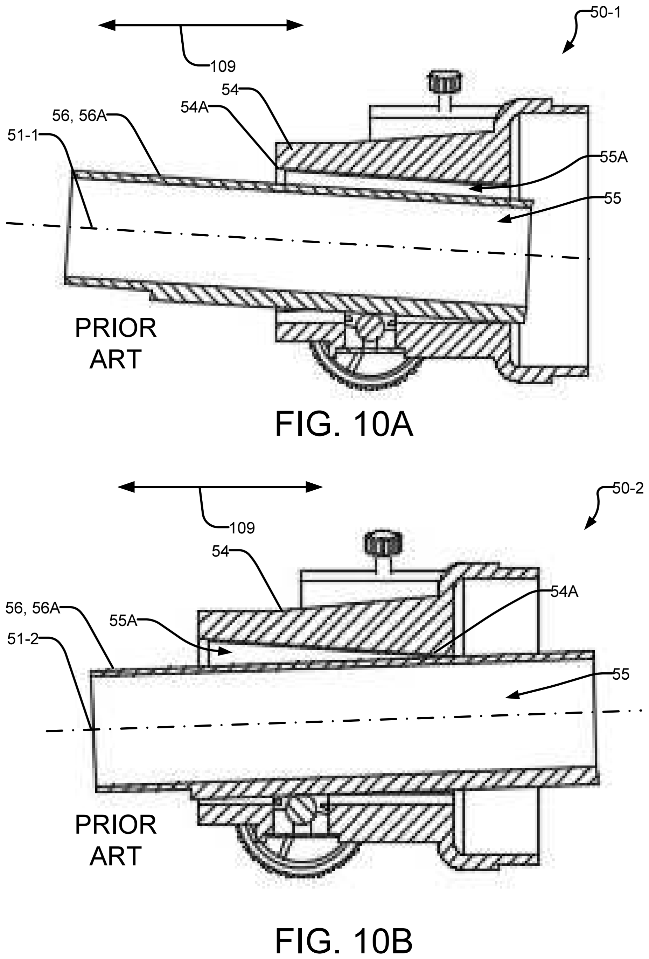

FIG. 10A and FIG. 10B respectively schematically illustrate configurations 50-1 and 50-2 of a conventional focusing system 50.

Focusing system 50 is of generally the same design as conventional focusing system 10 shown in FIG. 1A and FIG. 1B. Focusing system 50 differs from focusing system 10 in that borehole 55 defined by a bore-defining surface 54A of fixed tube 54 is not perfectly cylindrically shaped and tapers from one end to the other. In other words, the radius of borehole 55 is different at various longitudinal positions along longitudinal directions 109. As a result, when moving tube 56 moves relative to fixed tube 54 in longitudinal directions 109, the orientation of moving tube 56 (relative to that of fixed tube 54) may vary and moving tube 56 may not be as co-axial with fixed tube 54 as desired because movement of moving tube 56 along longitudinal directions 109 is not perfectly parallel to longitudinal directions 109. Gap 55A between fixed tube 54 and moving tube 56 may have varying dimensions as moving tube 56 moves relative to fixed tube 54.

As shown in FIG. 10A and FIG. 10B, as moving tube 56 moves from configuration 50-1 to configuration 50-2, optical axis 51-1 has an orientation different from optical axis 51-2. The varying orientation of moving tube 56 relative to fixed tube 54 may cause jamming during operation of system 50. Furthermore, the varying orientation of optical axis 51 during operation of system 50 may cause image drift.

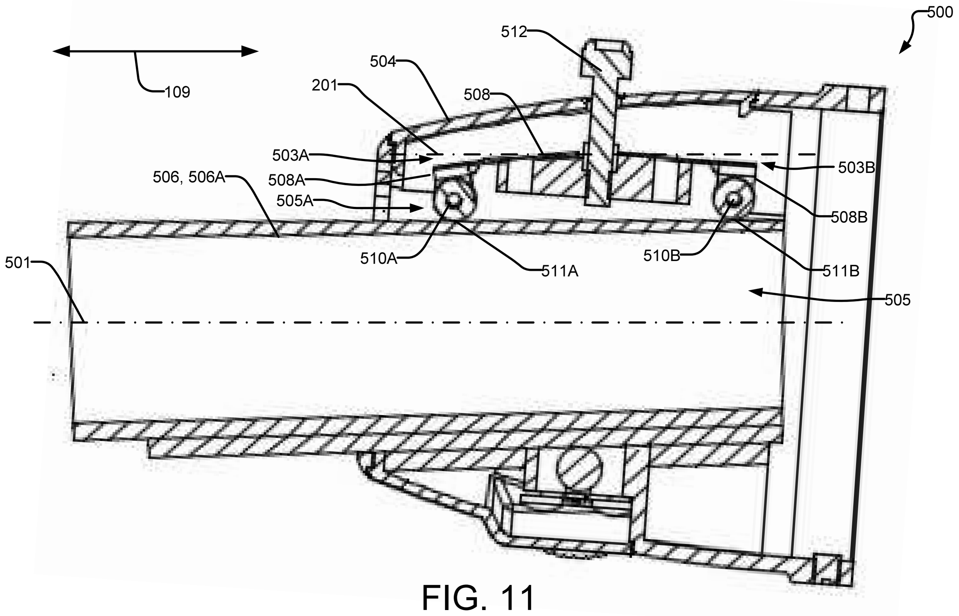

In contrast, the designs disclosed herein may improve the functioning of a focusing system with a fixed tube that defines a borehole that tapers from one end to the other. FIG. 11 shows a focusing system 500 according to an example embodiment.

The principle of operation of focusing system 500 is generally similar to system 100 and features of system 100 described herein should be considered to be applicable to system 500 unless the context indicates otherwise. In system 500, borehole 505 defined by fixed tube 504 tapers from one end to the other (i.e. the radius of borehole 505 is different at various longitudinal locations along longitudinal directions 109). Deformable pressing plate 508 of focusing system 500, which is affixed to fixed tube 504 by shaft 512, may compensate for the tapering borehole 505 to ensure that optical axis 501 maintains a more consistent orientation when compared to optical axis 51 of prior art system 50.

Deformable pressing plate 508 compensates for the tapering borehole 505 by allowing first end 508A (or a first section on one longitudinal side of shaft 512) to have a different degree of deformation from second end 508B (or a second section on a second (opposed) longitudinal side of shaft 412) and/or by otherwise shaping pressing plate 508 to be asymmetric. In FIG. 11, first section 508A (or a plane tangent to first section 508A) deforms to form an angle 503A with reference level plane 201 and second section 508B (or a plane tangent to second section 508B) deforms to form an angle 503B with reference level plane 201. Angle 503A (and the corresponding space between bearing 510A and reference level plane 201) may be different from angle 503B (and the corresponding space between bearing 410B and reference level plane 201) in FIG. 11 to allow both bearing 510A, which is coupled to pressing plate 508 at first section 508A, and bearing 510B, which is coupled to pressing plate 508 at second section 508B to make contact with outer surface 506A of moving tube 506 respectively at regions of contact 511A and 511B.

As moving tube 506 moves relative to fixed tube 504, angles 503A and 503B may adjust due to the elasticity of deformable pressing plate 508 and associated restorative forces to ensure that bearings 510A and 510B maintain contact with outer surface 506A of moving tube 506 throughout the movement, and therefore, ensuring a consistent orientation of optical axis 501 that is substantially parallel to longitudinal directions 109, thereby mitigating image drift relative to prior art systems.

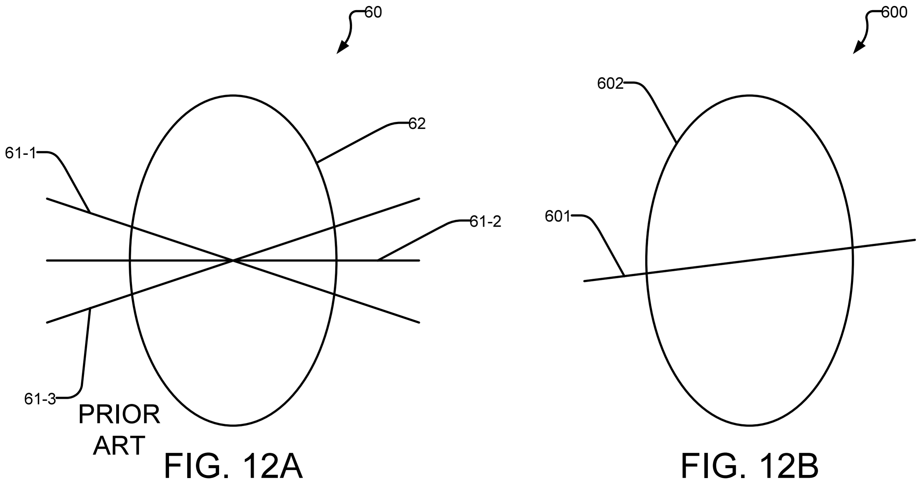

FIG. 12A illustrates a relationship 60 between an optical axis 61 and optical element 62 from general operation of prior art conventional systems 10, 20, 30, 40 and 50. FIG. 12B illustrates a relationship 600 between an optical axis 601 and optical element 602 from general operation of example embodiments of optical systems 100, 300, 400 and 500 described in this application.

As shown in FIG. 12A optical axis 61 may be oriented in a plurality of different directions 61-1, 61-2 and 61-3, etc. during operations of prior art conventional systems 10, 20, 30, 40 and 50. The varying orientation of optical axis 61 affects image quality by causing image drift. In contrast FIG. 12B shows that optical axis 601 maintains a consistent orientation relative to optical element 602 during operation of example embodiments of optical systems 100, 300, 400 and 500 of this application. The consistent orientation of optical axis 601 may also provide stability and reduce wear of optical systems.

### Interpretation of Terms

Where a component (e.g. a software module, processor, assembly, device, circuit, etc.) is referred to herein, unless otherwise indicated, reference to that component (including a reference to a "means") should be interpreted as including as equivalents of that component any component which performs the function of the described component (i.e., that is functionally equivalent), including components which are not structurally equivalent to the disclosed structure which performs the function in the illustrated exemplary embodiments of the invention.

Unless the context clearly requires otherwise, throughout the description and the claims:
- "comprise", "comprising", and the like are to be construed in an inclusive sense, as opposed to an exclusive or exhaustive sense; that is to say, in the sense of "including, but not limited to";
- "connected", "coupled", or any variant thereof, means any connection or coupling, either direct or indirect, between two or more elements; the coupling or connection between the elements can be physical, logical, or a combination thereof;
- "herein", "above", "below", and words of similar import, when used to describe this specification, shall refer to this specification as a whole, and not to any particular portions of this specification;
- "or", in reference to a list of two or more items, covers all of the following interpretations of the word: any of the items in the list, all of the items in the list, and any combination of the items in the list;
- the singular forms "a", "an", and "the" also include the meaning of any appropriate plural forms. These terms ("a", "an", and "the") mean one or more unless stated otherwise;
- "and/or" is used to indicate one or both stated cases may occur, for example A and/or B includes both (A and B) and (A or B);
- "approximately" when applied to a numerical value means the numerical value ± 10%;
- where a feature is described as being "optional" or "optionally" present or described as being present "in some embodiments" it is intended that the present disclosure encompasses embodiments where that feature is present and other embodiments where that feature is not necessarily present and other embodiments where that feature is excluded. Further, where any combination of features is described in this application this statement is intended to serve as antecedent basis for the use of exclusive terminology such as "solely," "only" and the like in relation to the combination of features as well as the use of "negative" limitation(s)" to exclude the presence of other features; and
- "first" and "second" are used for descriptive purposes and cannot be understood as indicating or implying relative importance or indicating the number of indicated technical features.

Words that indicate directions such as "vertical", "transverse", "horizontal", "upward", "downward", "forward", "backward", "inward", "outward", "left", "right", "front", "back", "top", "bottom", "below", "above", "under", and the like, used in this description and any accompanying claims (where present), depend on the specific orientation of the apparatus described and illustrated. The subject matter described herein may assume various alternative orientations. Accordingly, these directional terms are not strictly defined and should not be interpreted narrowly.

Where a range for a value is stated, the stated range includes all sub-ranges of the range. It is intended that the statement of a range supports the value being at an endpoint of the range as well as at any intervening value to the tenth of the unit of the lower limit of the range, as well as any subrange or sets of sub ranges of the range unless the context clearly dictates otherwise or any portion(s) of the stated range is specifically excluded. Where the stated range includes one or both endpoints of the range, ranges excluding either or both of those included endpoints are also included in the invention.

Certain numerical values described herein are preceded by "about". In this context, "about" provides literal support for the exact numerical value that it precedes, the exact numerical value ±5%, as well as all other numerical values that are near to or approximately equal to that numerical value. Unless otherwise indicated a particular numerical value is included in "about" a specifically recited numerical value where the particular numerical value provides the substantial equivalent of the specifically recited numerical value in the context in which the specifically recited numerical value is presented. For example, a statement that something has the numerical value of "about 10" is to be interpreted as: the set of statements:
- in some embodiments the numerical value is 10;
- in some embodiments the numerical value is in the range of 9.5 to 10.5;
and if from the context the person of ordinary skill in the art would understand that values within a certain range are substantially equivalent to 10 because the values with the range would be understood to provide substantially the same result as the value 10 then "about 10" also includes:
- in some embodiments the numerical value is in the range of C to D where C and D are respectively lower and upper endpoints of the range that encompasses all of those values that provide a substantial equivalent to the value 10

Specific examples of systems, methods and apparatus have been described herein for purposes of illustration. These are only examples. The technology provided herein can be applied to systems other than the example systems described above. Many alterations, modifications, additions, omissions, and permutations are possible within the practice of this invention. This invention includes variations on described embodiments that would be apparent to the skilled addressee, including variations obtained by: replacing features, elements and/or acts with equivalent features, elements and/or acts; mixing and matching of features, elements and/or acts from different embodiments; combining features, elements and/or acts from embodiments as described herein with features, elements and/or acts of other technology; and/or omitting combining features, elements and/or acts from described embodiments.

As will be apparent to those of skill in the art upon reading this disclosure, each of the individual embodiments described and illustrated herein has discrete components and features which may be readily separated from or combined with the features of any other described embodiment(s) without departing from the scope of the present invention.

Any aspects described above in reference to apparatus may also apply to methods and vice versa.

Any recited method can be carried out in the order of events recited or in any other order which is logically possible. For example, while processes or blocks are presented in a given order, alternative examples may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed in parallel, simultaneously or at different times.

Various features are described herein as being present in "some embodiments". Such features are not mandatory and may not be present in all embodiments. Embodiments of the invention may include zero, any one or any combination of two or more of such features. All possible combinations of such features are contemplated by this disclosure even where such features are shown in different drawings and/or described in different sections or paragraphs. This is limited only to the extent that certain ones of such features are incompatible with other ones of such features in the sense that it would be impossible for a person of ordinary skill in the art to construct a practical embodiment that combines such incompatible features. Consequently, the description that "some embodiments" possess feature A and "some embodiments" possess feature B should be interpreted as an express indication that the inventors also contemplate embodiments which combine features A and B (unless the description states otherwise or features A and B are fundamentally incompatible).This is the case even if features A and B are illustrated in different drawings and/or mentioned in different paragraphs, sections or sentences.

It is therefore intended that the following appended claims and claims hereafter introduced are interpreted to include all such modifications, permutations, additions, omissions, and sub-combinations as may reasonably be inferred. The scope of the claims should not be limited by the preferred embodiments set forth in the examples, but should be given the broadest interpretation consistent with the description as a whole.

## Claims

1. A focusing system for an optical instrument such as a telescope, the focusing system comprising:
a first tube that extends in a longitudinal direction;
a second tube that extends in the longitudinal direction, the second tube comprising a bore-defining surface shaped to define a bore that extends in the longitudinal direction wherein the first tube extends into the bore;
an optical element coupled to one of the first and second tubes for movement therewith;
an elastically deformable element located between an outer surface of the first tube and the bore-defining surface of the second tube and extending in the longitudinal direction; and
first and second rolling bearings supported at first and second longitudinally spaced apart sections of the elastically deformable element for rolling movement while supported at the first and second sections, the first and second rolling bearings in contact with the outer surface of the first tube;
wherein relative movement between the first and second tubes in the longitudinal direction is facilitated by rolling movement of the rolling bearings along the outer surface of the first tube.

2. The focusing system of claim 1 or any other claim herein wherein the elastically deformable element is deformed from its non-stressed state such that restorative forces associated with the deformation of the elastically deformable element tend to force the rolling bearings into contact with the outer surface of the first tube.

3. The focusing system of any one of claims 1 to 2 or any other claim herein wherein the elastically deformable element is deformable such that the first and second longitudinally spaced sections of the elastically deformable element are displaceable in directions having directional components orthogonal to the longitudinal direction (e.g. having components in radial directions of the second tube).

4. The focusing system of claim 3 or any other claim herein wherein the elastically deformable element is deformed such that the first longitudinal section of the elastically deformable element has a first displacement in a first direction having at least a component orthogonal to the longitudinal direction relative to a non-deformed state of the elastically deformable element and the second longitudinal section of the elastically deformable element has a second displacement in a second direction having at least a component orthogonal to the longitudinal direction relative to the non-deformed state of the elastically deformable element.

5. The focusing system of claim 4 or any other claim herein wherein a magnitude of the first displacement is different from a magnitude of the second displacement.

6. The focusing system of claim 4 or any other claim herein wherein a magnitude of the first displacement is the same as a magnitude of the second displacement.

7. The focusing system of any one of claims 1 to 6 or any other claim herein comprising one or more shafts, the one or more shafts extending between, and connected to, the elastically deformable element and the second tube to couple the elastically deformable element to the second tube.

8. The focusing system of claim 7 or any other claim herein wherein the elastically deformable element is shaped to define one or more holes at locations between the first and second sections, the one or more shafts extending through corresponding ones of the one or more holes in directions having directional components orthogonal to the longitudinal direction.

9. The focusing system of claim 8 or any other claim herein wherein the one or more shafts extend through one or more corresponding holes defined through the second tube.

10. The focusing system of claim 9 or any other claim herein wherein at least one of the one or more shafts is threadably connected to at least one of: the elastically deformable element as the at least one of the one or more shafts extends through the corresponding one of the one or more holes defined in the elastically deformable element; and the second tube as the at least one of the one or more shafts extends through the corresponding one of the one or more holes defined through the second tube.

11. The focusing system of any one of claims 9 to 10 or any other claim herein comprising a support component, the support component located between the outer surface of the first tube and the elastically deformable element and wherein the one or more shafts extend through one or more corresponding holes defined through the support component.

12. The focusing system of claim 11 or any other claim herein wherein at least one of the one or more shafts is threadably connected to the support component as the at least one of the one or more shafts extends through the corresponding one of the one or more holes defined through the second tube.

13. The focusing system of any one of claims 7 to 12 or any other claim herein wherein at least one of the one or more shafts is adjustable to alter a distance between the elastically deformable element and the second tube and wherein varying the distance between the elastically deformable element and the second tube varies an amount of deformation of the elastically deformable element.

14. The focusing system of any one of claims 1 to 13 or any other claim herein comprising a shaft that extends between and is connected to the elastically deformable element and the second tube and wherein the extension is in a direction having a directional component orthogonal to the longitudinal direction.

15. The focusing system of claim 14 or any other claim herein wherein a position of the shaft relative to the second tube is adjustable and variation of the position of the shaft relative to the second tube varies an amount of deformation of the elastically deformable member.

16. The focusing system of claim 15 or any other claim herein wherein the position of the shaft is threadably adjustable relative to the second tube.

17. The focusing system of any one of claims 1 to 16 or any other claim herein comprising first and second bearing supports located at the first and second sections of the elastically deformable element and wherein the first and second bearing supports are shaped to constrain the rolling movement of the first and second rolling bearings along the outer surface of the first tube to the longitudinal direction.

18. The focusing system of any one of claims 1 to 17 or any other claim herein wherein the first and second rolling bearings are substantially aligned with one another in the longitudinal direction.

19. The focusing system of any one of claims 1 to 18 or any other claim herein wherein the first and second rolling bearings comprising ball bearings or ball bearing assemblies.

20. The focusing system of any one of claims 1 to 19 or any other claim herein wherein the bore-defining surface of the second tube is shaped to define a first support and a second support, the first and second supports extending in the longitudinal direction and having contact surfaces in contact with the outer surface of the first tube, the contact surfaces having shapes complementary to a shape of the outer surface of the first tube.

21. The focusing system of claim 20 or any other claim herein wherein the first support and the second support are angularly spaced apart from one another about a longitudinally extending axis.

22. The focusing system of claim 21 or any other claim herein wherein the first and second supports are angularly spaced apart with a center-to-center angular spacing in a range of about 45°-180°.

23. The focusing system of claim 22 or any other claim herein wherein the center-to-center angular spacing is in a range of about 75°-150°.

24. The focusing system of any one of claims 21 to 23 or any other claim herein wherein each of the first and second rolling bearings is angularly spaced apart equally from both the first support and the second support about the longitudinally extending axis.

25. The focusing system of claim 24 or any other claim herein wherein each of the first and second rolling bearings is angularly spaced apart from each of the first and second supports by about 120° about the longitudinally extending axis.

26. The focusing system of any one of claims 1 to 25 or any other claim herein comprising an orthogonal biasing system operative to apply an orthogonal force against the first tube, the orthogonal force oriented to have a component orthogonal to the longitudinal direction.

27. The focusing system of claim 26 or any other claim herein, wherein at least one of the orthogonal force and restorative forces associated with the deformation of the elastically deformable element maintain contact between the rolling bearings and the outer surface of the first tube.

28. The focusing system of claim 27 or any claim herein wherein the orthogonal force and the restorative forces associated with the deformation of the elastically deformable element are opposed to one another and cooperate to maintain contact between the rolling bearings and the outer surface of the first tube.

29. The focusing system of any one of claims 26 to 28 or any other claim herein wherein at least one of the orthogonal force and restorative forces associated with the deformation of the elastically deformable element maintain the first tube and the second tube in a substantially co-axial relationship to thereby mitigate image drift.

30. The focusing system of any one of claims 26 to 28 or any other claim herein wherein the orthogonal force and restorative forces associated with the deformation of the elastically deformable element are opposed to one another and cooperate to maintain the first tube and the second tube in a substantially co-axial relationship to thereby mitigate image drift.

31. The focusing system of any one of claims 26 to 30 or any other claim herein wherein the orthogonal biasing system comprises a compressed spring and a pressure plate connected directly or indirectly, through another fixed component, to a base of the focusing system.

32. The focusing system of claim 31 or any other claim herein wherein the pressure plate is adjustably connected to the base to thereby control the amount of orthogonal force applied by the orthogonal biasing system.

33. The focusing system of any one of claims 26 to 32 or any other claim herein comprising a focus-adjustment mechanism for transferring longitudinally oriented force between the first and second tubes, which causes the first and second tubes to move in the longitudinal directions relative to one another.

34. The focusing system of claim 33 or any other claim herein wherein the focus-adjustment mechanism comprises:
a friction bar coupled to the first tube, the friction bar comprising a friction surface; and
a focus-adjustment shaft in contact with the friction surface and supported for rotation about a focus-adjustment axis that is substantially orthogonal to the longitudinal direction;
wherein friction between the focus-adjustment shaft and the friction surface caused by rotation of the focus-adjustment shaft about the focus-adjustment axis creates the longitudinally oriented force between the first and second tubes.

35. The focusing system of claim 33 or any other claim herein wherein the focus-adjustment mechanism comprises:
a longitudinally extending toothed rack coupled to the first tube; and
a focus-adjustment shaft comprising a gear engaged with the toothed rack, the focus-adjustment shaft supported for rotation about a focus-adjustment axis;
wherein interaction between the gear and the toothed rack caused by rotation of the focus-adjustment shaft about the focus-adjustment axis creates the longitudinally oriented force between the first and second tubes.

36. The focusing system of claim 35 or any other claim herein wherein the focus-adjustment axis is substantially orthogonal to the longitudinal direction.

37. The focusing system of claim 35 or any other claim herein wherein the focus-adjustment axis is oriented in the longitudinal direction and the gear is a worm gear.

38. The focusing system of any one of claims 34 to 37 or any other claim herein wherein the orthogonal biasing mechanism applies the orthogonal force against the first tube via the focus-adjustment shaft.

39. The focusing system of claim 38 or any other claim herein wherein the orthogonal force is oriented in a direction that is orthogonal to both the longitudinal direction and the focus-adjustment axis.

40. The focusing system of claim 38 or any other claim herein wherein the orthogonal force has a directional component oriented in a direction that is orthogonal to both the longitudinal direction and the focus-adjustment axis.

41. The focusing system of any one of claims 34 to 39 or any other claim herein comprising a shaft support block defining a concavity wherein the focus-adjustment shaft is supported by the shaft support block within the concavity.

42. The focusing system of any one of claims 34 to 39 or any other claim herein comprising one or more pivot joints and wherein the focus-adjustment shaft is supported for rotation about the focus-adjustment axis by the one or more pivot joints.

43. The focusing system of any one of claims 26 to 42 or any other claim herein wherein the orthogonal force assists with facilitating rolling movement in the longitudinal direction of the rolling members along the outer surface of the first tube.

44. The focusing system of any one of claims 26 to 43 or any other claim herein wherein the orthogonal force assists with mitigating sliding movement of the rolling members along the outer surface of the first tube.

45. Apparatus having any new and inventive feature, combination of features, or sub-combination of features as described herein.

46. Methods having any new and inventive steps, acts, combination of steps and/or acts or sub-combination of steps and/or acts as described herein.
